(19) Europäisches Patentamt / European Patent Office / Office européen des brevets

(11) **EP 3 054 154 A1**

(12) **EUROPEAN PATENT APPLICATION**

(43) Date of publication:
10.08.2016  Bulletin 2016/32

(21) Application number: 16154296.4

(22) Date of filing: 04.02.2016

(51) Int Cl.:
*F03D 17/00* (2016.01)      *F03D 80/50* (2016.01)
*G01N 25/72* (2006.01)      *G01M 5/00* (2006.01)
*G01M 99/00* (2011.01)      *G01N 21/70* (2006.01)
*G01N 21/88* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  05.02.2015  JP 2015020865

(71) Applicant: **Hitachi, Ltd.
Tokyo 100-8280 (JP)**

(72) Inventor: **SAWADA, Takahiko
Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **STRUCTURE MATERIAL, WIND POWER GENERATION EQUIPMENT, AND WIND POWER GENERATION SYSTEM**

(57)      A structure material of a structure used mainly in an outdoor environment, includes a substrate as a base of the structure material, a first protection layer 105 formed on one main surface of the substrate, and a second protection layer 106 formed on the first protection layer 105 so as to cover the first protection layer (105).

FIG. 1

**Description**

BACKGROUND OF THE INVENTION

1. Field of the Invention

The present invention relates to a wind power generation equipment, particularly to a method for monitoring a surface state of each portion in the wind power generation equipment.

2. Description of the Related Art

In a wind power generation equipment, a windmill, that is, a rotor including a blade and a hub rotates by receiving wind, and converts the rotation energy into electricity. Once such a wind power generation equipment is installed, the wind power generation equipment is used continuously, and is inspected regularly every one year or two years.

Meanwhile, the wind power generation equipment is generally installed at a place where the strong wind blows continuously for a long time, and is often installed on the shoreline around which a high building or a tree does not exist. In order to enhance a power generation efficiency, construction of a large wind power generation equipment on the sea far away from the seashore is increasing.

Near the seashore or on the sea, the wind power generation equipment may be affected by salt water in addition to ultraviolet rays due to the sunlight, wind, and rain, or a hailstone or a bird may collide therewith. A defect such as lightning damage also occurs. In addition, the wind power generation equipment is often installed at a place having severe weather conditions. For example, in a desert, a difference in temperature is very large, and the wind power generation equipment is exposed to the strong sunlight and may be affected by a sand storm. In a volcanic region, the wind power generation equipment may be affected by corrosive gas or volcanic ash.

As described above, the wind power generation equipment is exposed to a severe environment. Therefore, a defect such as damage, deformation, surface contamination, or surface peeling occurs due to operation thereof for a long time. When such a defect occurs, a power generation efficiency is reduced due to poor appearance and damage on each part. Therefore, a surface protection layer to protect a surface is provided on a surface of a structure substrate (hereinafter, referred to as a substrate) constituting the wind power generation equipment, such as a blade or a tower, by a means such as coating.

The substrate is isolated from an outdoor environment by the surface protection layer, and therefore is prevented from being damaged. When this surface protection layer disappears, the substrate is exposed to an outdoor environment, and therefore is easily damaged or subjected to material deterioration. In order to repair the substrate having a defect such as damage or material deterioration, execution of works such as removing parts temporarily or performing repair works while the parts are unloaded on the ground, is necessary. During the execution of works, the wind power generation equipment is stopped and power generation cannot be performed.

Therefore, in the wind power generation equipment, it is important to detect a defect of a main structure exposed to an outdoor environment or a sign thereof early in order to increase an operating ratio or reliability of the wind power generation equipment, because repair can be performed in a short time due to the detection even when the repair is necessary.

SUMMARY OF THE INVENTION

As a means for detecting a defect of a windmill structure early and replacing or repairing parts properly, a method of monitoring the structure from a remote place with a camera or a method of monitoring a state by attaching a sensor to the structure, has been proposed.

For example, JP 2014-519024 W proposes a method and a device for optically assessing damage of a blade or a sign thereof.

JP 2014-519024 W describes that the method and the device are inexpensive and that a working risk to service workers can be reduced when a wind power generation device is repaired by detecting a sign of damage.

JP 2011-21988 A proposes a corrosion detecting device capable of detecting, in advance, corrosion caused by salt or the like, on a surface of a structure of a wind power generation equipment, and an outdoor structure provided with the same.

JP 2011-21988 A describes that it is possible to accurately perform maintenance of a coated film, a member, a part, or the like of the outdoor structure according to a corrosion environment.

JP 2013-155062 A proposes a technology of monitoring a crack generated in a structure from a remote place with a camera.

The technology described in JP 2013-155062 A uses a stress light emitting material which emits light when a stress is applied, and has a characteristic that a magnitude of the stress is highly correlated with an emission intensity. In the technology, a part where a high stress is applied or a portion where a crack is generated is detected by a camera by attaching a coating material containing this stress light emitting material or a sheet-like processed material to a surface of a structure.

However, it is not easy to accurately find a crack generated on a surface of a blade in rotation by a light-emitting means proposed in JP 2014-519024 W, such as a camera or a laser pointer.

In the technology described in JP 2011-21988 A, it is not easy to detect corrosion or deterioration on a surface of a structure located far away from a sensor part, and an amount of data is increased when the number of the sensor is increased. Therefore, a means for enhancing reliability of a data storage device or a transmission device is necessary separately.

In the technology described in JP 2013-155062 A, a part an emission intensity of which is increased after a crack is generated in a structure is detected as a portion where a crack is generated. An external force caused by natural wind is applied to a wind power generation equipment constantly. Therefore, once a crack is generated in a structure material, the equipment may be broken immediately by a contingent stiff wind. According to the technology described in JP 2013-155062 A, before such an accident occurs, it is possible to repair a part having a crack or replace the part with a new one by detecting the part. However, it is necessary to stop the power generation equipment in the meanwhile.

In addition, even when the part having a crack is repaired, it is difficult to secure soundness thereof. Therefore, the part is replaced with a new one according to a degree of damage. Therefore, it is necessary to find a defect part earlier than generation of a crack from a viewpoint of time or cost relating to maintenance.

Therefore, an object of the present invention is to provide a structure material capable of easily monitoring a damage state of a surface.

Another object of the present invention is to provide a wind power generation equipment capable of easily monitoring a damage state of a surface of a portion exposed to an outdoor environment.

Still another object of the present invention is to provide a wind power generation system capable of easily monitoring a damage state of a surface of a portion exposed to an outdoor environment.

In order to solve the above-described problems, the present invention provides a structure material of a structure used mainly in an outdoor environment. The structure material is characterized by including a substrate as a base of the structure material, a first protection layer formed on one main surface of the substrate, and/or a second protection layer formed on the first protection layer so as to cover the first protection layer.

In addition, the present invention provides a wind power generation equipment including a rotation axis to which a plurality of blades is connected, a nacelle supporting the rotation axis rotatably, and a tower serving as a prop of the nacelle. The wind power generation equipment is characterized in that a structure material on a surface of which a protection layer is formed is used in at least one portion of the plurality of blades, the rotation axis, the nacelle, and the tower and that the structure material is the structure material according to any one of claims 1 to 5.

Furthermore, the present invention provides a wind power generation system including the wind power generation equipment according to any one of claims 6 to 12, a damage detecting unit configured to detect a damage state of a surface of the wind power generation equipment from the outside, and a surface damage detecting system configured to process data acquired by the damage detecting unit. The surface damage detecting system is characterized by including an image processing device configured to perform image processing for the data acquired by the damage detecting unit, an image display device configured to display the image processing data processed by the image processing device, a recording device configured to record the image processing data processed by the image processing device, and/or a transmitting unit configured to transmit the image processing data recorded in the recording device to the outside by wired communication or wireless communication.

According to an aspect of the present invention, it is possible to realize a structure material capable of easily monitoring a damage state of a surface.

In addition, according to an aspect of the present invention, it is possible to realize a wind power generation equipment capable of easily monitoring a damage state of a surface of a portion exposed to an outdoor environment.

In addition, according to an aspect of the present invention, it is possible to realize a wind power generation system capable of easily monitoring a damage state of a surface of a portion exposed to an outdoor environment.

Problems, structures, and effects other than the above will be clarified by the following description of embodiments.

BRIEF DESCRIPTION OF THE DRAWINGS

Fig. 1 is a schematic structure view of a wind power generation equipment according to an embodiment of the present invention;

Fig. 2 is a schematic view of a blade for wind power generation according to an embodiment of the present invention;
Fig. 3 is an A-A' cross sectional view in Fig. 2;
Fig. 4 is an enlarged view of a B part in Fig. 3;
Fig. 5 is a view illustrating a state in which a part of a second layer has disappeared in Fig. 4;
Fig. 6 is a partial schematic view of a tower of a wind power generation equipment according to an embodiment of the present invention;
Fig. 7 is a C-C' cross sectional view in Fig. 6;
Fig. 8 is an enlarged view of a smooth part in Fig. 7;
Fig. 9 is a view illustrating a state in which a part of a first layer is exposed in Fig. 8;
Fig. 10 is an enlarged view of a longitudinal welded part in Fig. 6;
Fig. 11 is a diagram conceptually illustrating a L*a*b* color system expressing a color of an object;
Fig. 12 is a view illustrating another embodiment of a surface protection layer of a blade substrate;
Fig. 13 is a view illustrating a state in which the surface protection layer disposed on a surface of the blade substrate is worn away;
Fig. 14 is a cross sectional view after the surface protection layer is repaired in Fig. 12;
Fig. 15 is a schematic structure view of a wind power generation equipment provided with a substrate surface damage detecting system according to an embodiment of the present invention;
Fig. 16 is a block diagram illustrating the substrate surface damage detecting system according to an embodiment of the present invention; and
Fig. 17 is a view illustrating a set type wind power generation equipment provided with a substrate surface damage detecting system according to an embodiment of the present invention.

DESCRIPTION OF THE EMBODIMENTS

Hereinafter, Examples of the present invention will be described with reference to the drawings.

[Example 1]

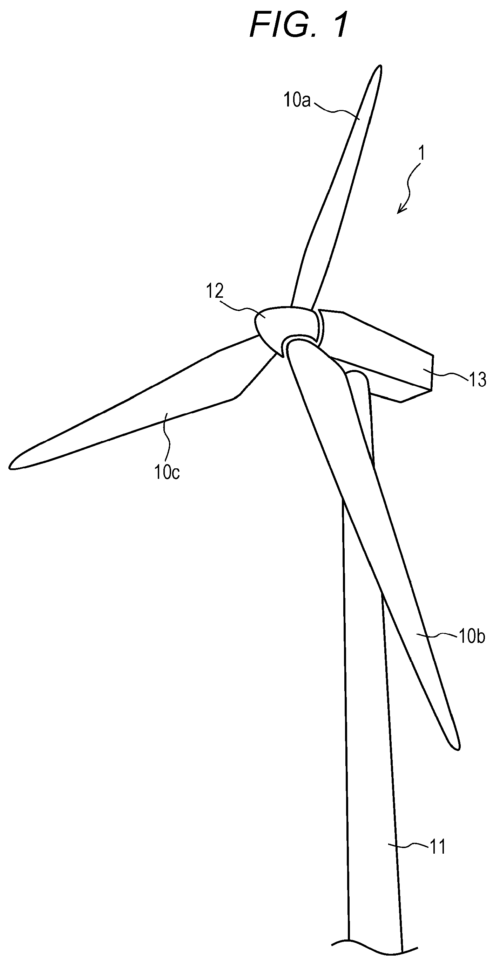

Fig. 1 is a schematic structure view of a typical wind power generation equipment according to the present embodiment. In Fig. 1, a blade 10 (10a, 10b, 10c) of a wind power generation equipment 1 is attached to a rotation axis 12, and power is generated by a power generation device (not illustrated) in a nacelle 13. A reference sign 11 indicates a tower supporting the nacelle 13.

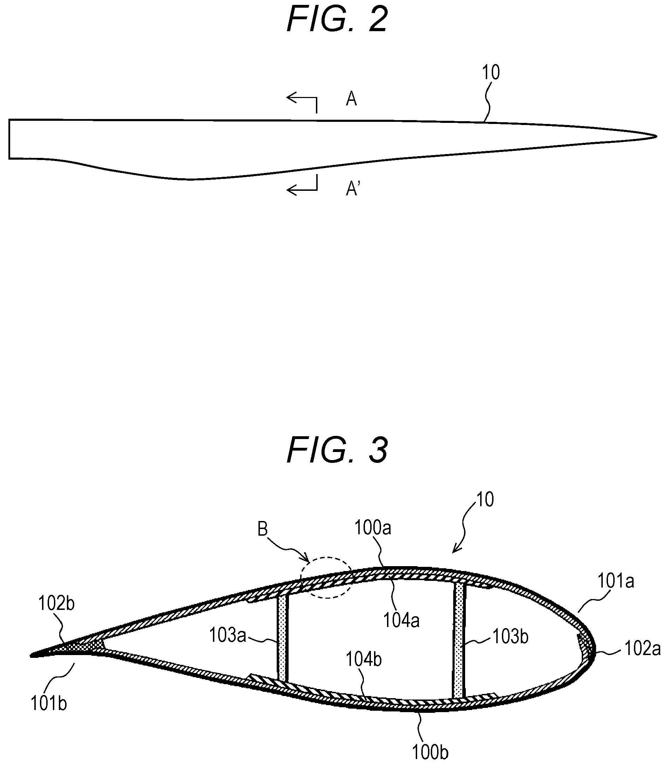

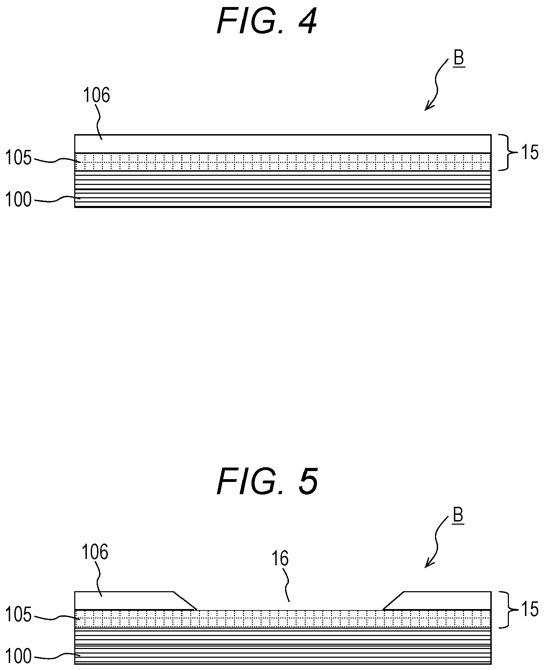

Next, an outline of a damage detecting unit on a surface of a blade substrate of the wind power generation equipment according to the present embodiment will be described with reference to Figs. 2 to 5. Fig. 2 is a schematic view of the blade of the wind power generation equipment in a planar view of the blade 10 in the wind power generation equipment illustrated in Fig. 1. Fig. 3 illustrates an A-A' cross section in Fig. 2, viewed in the arrow direction. Fig. 4 illustrates an enlarged view in a range B surrounded by a dotted line in Fig. 3. A first layer 105 containing a stress light emitting material is disposed on a surface of a blade substrate 100, provided with a surface protection layer 15 in which a second layer 106 is disposed on the other surface of the first layer 105. Fig. 5 is a view illustrating an exposed part 16 in which the second layer 106 is exposed in Fig. 4.

The blade 10 is molded and manufactured by a hand lay up method, a resin impregnation method, a vacuum impregnation method, an autoclave method, or the like, using glass-fiber-reinforced-plastic (hereinafter, referred to as GFRP) containing a polyester resin or an epoxy resin as a base material and using carbon-fiber-reinforced-plastic (hereinafter, referred to as CFRP) as a structure material. An airfoil is formed by bonding a plurality of members by a bonding agent or another bonding means.

The blade 10 is formed into an airfoil to obtain a rotating force aerodynamically. As illustrated in Fig. 3, main components of the blade 10 main body are a front side outer skin 100a and a rear side outer skin 100b which are divided into an upstream side and a downstream side and face each other, a front end 101a disposed in a front end of the front side outer skin 100a and the rear side outer skin 100b in a rotational direction, and a rear end 101b disposed in a rear end of the front side outer skin 100a and the rear side outer skin 100b in the rotational direction.

The front end 101a and the rear end 101b are adhesively bonded to an adhesively bonded part 102a and an adhesively bonded part 102b, respectively, and thereby form the airfoil of the blade 10 main body. Webs 103a and 103b are each formed into a long and narrow plate shape extending toward an end of the blade 10 main body in a longitudinal direction. These webs 103a and 103b are disposed substantially perpendicularly to the front side outer skin 100a and the rear side outer skin 100b. One edge thereof is connected to the front side outer skin 100a via a girder member 104a directly or indirectly. The other edge thereof is connected to the rear side outer skin 100b via a girder member 104b directly or indirectly. Therefore, the webs 103a and 103b support the front side outer skin 100a and the rear side outer skin 100b facing each other and suppress bending of the blade 10 main body anteroposteriorly.

The stress light emitting material contained in the first layer 105 emits light by itself by strain energy due to a mechanical external force such as a friction force, a shear force, an impact force, or pressure, and an emission intensity thereof changes in proportion to the strain energy.

Examples of this stress light emitting material include a material containing zinc sulfide (ZnS), strontium aluminate ($SrAl_2O_4$), or the like as a main component; a material having an unstable electron shell of 3d, 4d, 5d, or 4f in a base crystal of at least one metal oxide or complex oxide selected from $MgAl_2O_4$ and $CaAl_2O_4$ having a spinel structure, $Al_2O_3$ having a corundum structure, and $SrMgAl_{10}O_{17}$ having a β-alumina structure and containing at least one metal ion selected from rare earth metal ions and transition metal ions which can cause radiation transfer in this electron shell as a central ion of an emission center; a material containing at least one aluminate having a nonstoichiometric composition and having a lattice defect of emitting light when a carrier excited by mechanical energy returns to a ground state; a material containing at least one metal ion selected from rare earth metal ions and transition metal ions in this base material as a central ion of an emission center; and a material obtained by adding at least one emission center selected from rare earth metals and transition metals which emit light when an electron excited by mechanical energy returns to a ground state to a base material containing a complex of an oxide of at least one metal selected from Y, Ba, and Mg and an oxide of Si as a main component.

In addition, examples thereof include a material obtained by adding an emission center containing at least one rare earth metal or transition metal which emits light when an electron excited by mechanical energy returns to a ground state to a base material containing at least one oxide of $CaYAl_3O_7$, $Ca_2Al_2SiO_7$, $Ca_2(Mg,Fe)Si_2O_7$, $Ca_2B_2SiO_7$, $CaNaAlSi_2O_7$, $Ca_2MgSi_2O_7$, $(Ca,Na)_2(Al,Mg)$ $(Si,Al)_2O_7$, and $Ca_2(Mg,Al)$ $(Al,Si)SiO_7$ having a melilite structure; and a material obtained by adding an emission center containing at least one rare earth metal or transition metal which emits light when an electron excited by mechanical energy returns to a ground state to a base material containing $Sr_3Al_2O_6$ or $Ca_3Al_2O_6$ having a $FeS_2$ structure, such as ceramics or strontium aluminate having a β-alumina structure.

In general, an inorganic compound such as an aluminate or a silicate is used. Particularly, fine particles of strontium aluminate ($SrAl_2O_4$:Eu) obtained by adding europium which is becoming general or zinc sulfide (ZnS:Mn) obtained by adding manganese, or the like are more preferable.

These stress light emitting materials preferably have a spherical shape and a diameter of 1 μm to 10 μm in order to be filled in a synthetic resin or a synthetic fiber efficiently.

A base material of the first layer 105 preferably has high transparency in order to highlight a state when the stress light emitting material emits light. Specific examples thereof include a polyurethane resin, an acrylic resin, a fluororesin, an olefin resin, a polyester resin, a polyamide resin, an epoxy resin, a phenol resin, a vinyl chloride resin, a polycarbonate resin, and a copolymer and a blend of these synthetic resins. A resin having a high surface hardness and a small elasticity is more preferable in order to transmit a stress sufficiently.

The second layer 106 is made of a polymer resin material. Specific examples thereof include a polyurethane resin, an acrylic resin, a fluororesin, an olefin resin, a polyester resin, a polyamide resin, an epoxy resin, a phenol resin, a vinyl chloride resin, and a polycarbonate resin. A polyurethane resin or a fluororesin is preferably used from a viewpoint of light resistance. In addition, examples thereof include a copolymer and a blend of these synthetic resins.

The blade 10 is exposed to an outdoor environment. Therefore, a surface thereof is shaved by a raindrop or a dust, the surface is deteriorated by ultraviolet rays, or the first layer is worn away or peeled by collision of a flying object such as a bird, snow, or a hailstone. The first layer 105 is exposed as illustrated in Fig. 5. (Exposed part 16 of first layer generated by damage of substrate surface)

The first layer 105 emits light by receiving an external force, and therefore only an exposed part emits light in this state. Therefore, at night, it is possible to specify a light emitting portion visually at a close distance and to specify a light emitting portion using a camera capable of photographing even at night at a long distance. At a point of time when disappearance of the second layer 106 is detected by emission, soundness of the substrate is maintained or the substrate is damaged slightly. Therefore, it is possible to repair the blade 10 properly before the damage of the blade 10 is enlarged.

A portion to be provided with the first layer 105 and the second layer 106 is not limited to the blade substrate 100. The first layer 105 and the second layer 106 can be disposed on a substrate surface such as the adhesively bonded part 102 (102a, 102b) of the blade substrate, the web member 103 (103a, 103b), or the girder member 104 (104a, 104b), a bonded part between the members, a curved surface part having a rapidly-changing shape or size, or a notch. Use thereof is not limited according to a portion.

As described above, according to the present Example, it is possible to easily monitor a damage state of the blade surface in the wind power generation equipment.

In addition, it is possible to detect a portion requiring repair in advance before the blade of the wind power generation equipment is broken.

Furthermore, it is possible to specify a part to be repaired or to be coated again at the time of maintenance and inspection in advance. Therefore, it is possible to reduce time required for repair or an amount of a coating material required for coating. Therefore, it is possible to increase an operating ratio of the wind power generation equipment and to reduce maintenance cost.

[Example 2]

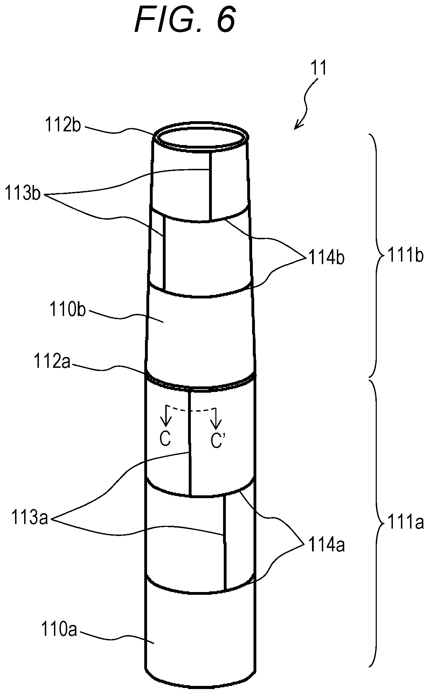

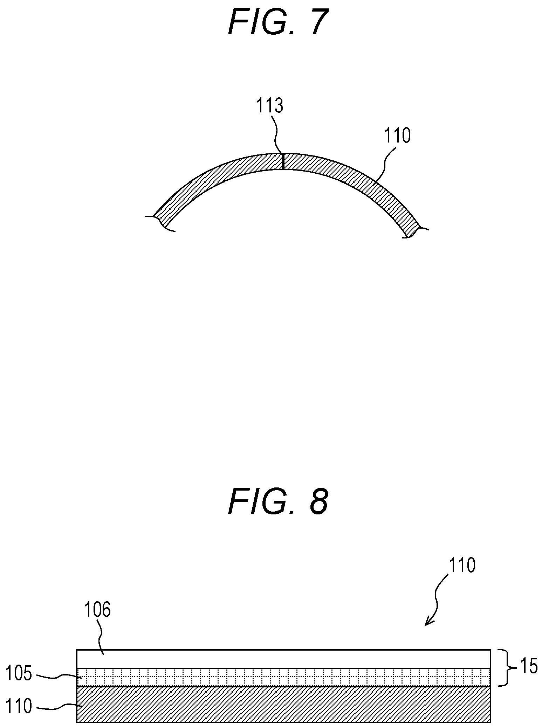

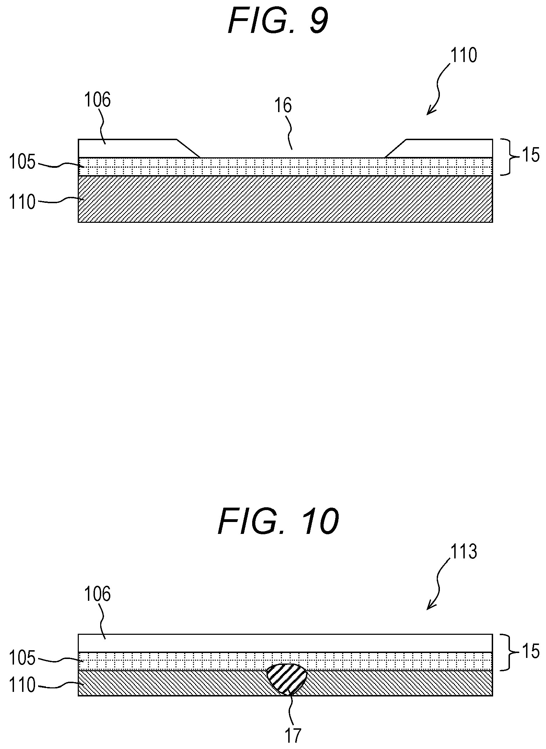

Next, an outline of a damage detecting unit on a surface of a tower substrate of the wind power generation equipment according to the present embodiment will be described with reference to Figs. 6 to 9. Fig. 6 is a partial schematic view of a tower according to the present embodiment, and illustrates a tower 11 in the wind power generation equipment illustrated in Fig. 1. Fig. 7 illustrates a C-C' cross section in Fig. 6, viewed in the arrow direction. In Fig. 7, the unit 110 is a smooth part of the tower substrate, and the unit 113 is a welded part of the tower in a height direction, that is, a longitudinal welded part. Fig. 8 is an enlarged view of the smooth part 110 in Fig. 7. The first layer 105 containing a stress light emitting material is disposed on a surface of the smooth part 110. The second layer 106 is disposed on the other surface of the first layer 105. Fig. 9 is a view illustrating the exposed part 16 in which the first layer 105 is exposed in Fig. 8.

The tower 11 is made of a steel material. A rolled material having a predetermined thickness is bent, one end is then bonded to the other end by welding at the longitudinal welded part 113 (113a, 113b), and the bonded material is processed into a cylinder shape like the tower cylinder 110a or 110b. A plurality of longitudinal welded parts 113 (113a, 113b) may be disposed on the circumferences of the tower cylinders 110a and 110b.

One tower cylinder 110a or 110b is bonded to the other tower cylinder 110a or 110b by welding at a circumferential welded part 114 (114a, 114b). This step is repeated multiple times, and a tower assembly part 111 (111a, 111b) obtained by welding bonding is bonded to the other tower assembly part 111 (111a, 111b) by fastening bolts at a flange part 112 (112a, 112b).

This step is repeated until a desired height is obtained to complete the tower of the wind power generation equipment. A revolving bearing (not illustrated), the nacelle 13 housing a power transmission system and a generator, the rotation axis 12, and a plurality of blades 10 (10a, 10b, 10c) is attached to the top of the tower 11.

As in the case of the blade 10 indicated in Example 1, the tower 11 is exposed to an outdoor environment. Therefore, a substrate surface thereof is shaved by a raindrop or a dust, the surface is deteriorated by ultraviolet rays, or the first layer 105 is worn away or peeled by collision of a flying object such as a bird, snow, or a hailstone. When the wind power generation equipment is installed near the seashore or on the sea, the first layer is worn away or peeled by a spray or salt of sea water, and the first layer 105 is exposed as illustrated in Fig. 9. (Exposed part 16 of first layer generated by damage of substrate surface)

The first layer 105 emits light by receiving an external force, and therefore only an exposed part emits light. At night, it is possible to specify a light emitting portion visually at a close distance and to specify a light emitting portion using a camera capable of photographing even at night at a long distance. At a point of time when disappearance of the first layer 105 is detected by emission, soundness of the substrate is maintained or the substrate is damaged slightly. Therefore, it is possible to repair the tower 11 properly before the damage of the tower 11 is enlarged.

As described above, according to the present Example, it is possible to easily monitor a damage state of the tower surface in the wind power generation equipment.

In addition, it is possible to detect a portion requiring repair in advance before the tower of the wind power generation equipment is broken.

Furthermore, it is possible to specify a part to be repaired or to be coated again at the time of maintenance and inspection in advance. Therefore, it is possible to reduce time required for repair or an amount of a coating material required for coating. Therefore, it is possible to increase an operating ratio of the wind power generation equipment and to reduce maintenance cost.

[Example 3]

Fig. 10 is an enlarged view of the longitudinal welded part 113 (113a, 113b) in Fig. 6. In a welded part such as the longitudinal welded part 113 (113a, 113b), a discontinuous part 17 is formed by welding, and therefore a stress is concentrated easily. When an external force is applied, a high stress is generated in a stress concentration part. Therefore, the stress emission intensity of the first layer 105 which is exposed due to disappearance of the second layer 106 becomes higher and stronger light is emitted than in the smooth part described in Examples 1 and 2. Therefore, it is possible to detect damage on a surface of the structure material quickly.

When the second layer 106 disappears in such a discontinuous part, deterioration is accelerated by an influence of an outdoor environment, and reliability of the structure is reduced. Therefore, it is more effective to apply the present Example to the discontinuous part.

As described above, the substrate surface protection layer 15 including the first layer 105 and the second layer 106 may be disposed not only at the longitudinal welded part 113 (113a, 113b) of the tower 11 as in the present Example, but also, for example, at the flange part 112 (112a, 112b), a bonded part (welded part) such as the circumferential welded part 114 (114a, 114b), or a portion having a rapidly-changing shape or size.

Furthermore, the surface protection layer is provided not only on the smooth part in the blade 10 or the tower 11, but also can be applied to the adhesively bonded part 102 of the front end 101a and the rear end 101b in the blade 10 or a bonded part of the outer skin of the web 103 (103a, 103b) and the girder member 104 (104a, 104b).

As described above, the surface protection layer can be disposed on a bonded part between the plurality of members, a portion having a rapidly-changing shape or size, a notch such as a hole for fastening a bolt, or the like. An application range thereof is not limited according to a portion.

[Example 4]

Another embodiment of the present invention will be described. In the present Example, the exposed part 16 is detected by detecting a difference in stress distribution caused by a difference in heat elastic modulus between the first layer 105 and the second layer 106 described in Example 1 or 2 by an infrared temperature measuring unit such as infrared thermography.

The infrared thermography is a device for measuring an unsteady change in temperature. When gas is expanded adiabatically, the temperature of the gas is lowered. Conversely, when gas is compressed adiabatically, the temperature of the gas is elevated. When a stress is applied to solid suddenly, a similar phenomenon occurs. This is referred to as a heat elastic effect.

An amount of heat generation by a heat elastic effect of a homogeneous material such as metal is expressed by the following Formula 1.

[Numerical Formula 1]

$$\Delta T = -K_m \cdot T \cdot \Delta\sigma \qquad \ldots \quad \text{Formula 1}$$

Here, $\Delta\sigma$ represents a value of stress fluctuation of an object, T represents temperature, and $K_m$ represents heat elastic modulus. The heat elastic modulus $K_m$ is a specific numerical value determined by a thermophysical property of a material. Table 1 indicates a relation between thermophysical property values of typical structure materials used for the wind power generation equipment and the heat elastic modulus $K_m$ thereof. For example, $K_m$ of iron (Fe) is $3.45 \times 10^{-6}$ N/mm$^2$.

[Table 1]

| Material | Linear Expansion Coefficient $\alpha$ | Density $\rho$ | Constant Pressure Specific Heat $C_P$ | Room Temperature T | Temperature Fluctuation $\Delta T$ | Heat Elastic Modulus $K_m$ | Stress Fluctuation $\Delta\sigma$ |
|---|---|---|---|---|---|---|---|
| | | | | | | $K_m = \alpha/\rho\,C_P$ | $\Delta\sigma = |\Delta T/(K_m\cdot T)|$ |
| Unit | [1/K] | [kg/m$^3$] | [kJ/(kg·K)] | [K] | [mK] | [1/(N/mm$^5$)] | [N/mm$^2$] |
| Iron | 1.19E-05 | 7800 | 442 | 300 | 1.0 | 3.45E-06 | 0.97 |
| Aluminum | 2.31E-05 | 2688 | 905 | 300 | 1.0 | 9.50E-06 | 0.35 |
| SUS | 1.36E-05 | 7920 | 499 | 300 | 1.0 | 3.44E-06 | 0.97 |
| GFRP | 1.00E-05 | 2400 | 795 | 300 | 1.0 | 5.24E-06 | 0.64 |
| Epoxy Resin | 6.00E-05 | 1850 | 1100 | 300 | 1.0 | 2.95E-05 | 0.11 |
| Polyurethane Resin | 1.00E-05 | 1100 | 1758 | 300 | 1.0 | 5.17E-06 | 0.64 |
| Acrylic Resin | 7.70E-05 | 1190 | 1470 | 300 | 1.0 | 4.40E-05 | 0.08 |
| Fluororesin | 1.00E-04 | 2130 | 1000 | 300 | 1.0 | 4.69E-05 | 0.07 |

In the means for measuring a stress using the heat elastic effect in Formula 1 above, a minute temperature fluctuation caused when a stress fluctuation occurs in a measurement object is measured by a measurement unit such as infrared thermography, and is converted into a value of stress fluctuation $\Delta\sigma$ based on Formula 1.

Table 1 indicates conversion values of $\Delta\sigma$ at the temperature fluctuation of 1.0 mK in typical structure materials used for the wind power generation equipment. Here, $\Delta\sigma$ of iron (Fe) is 0.97N/mm$^2$, and $\Delta\sigma$ of GFRP is 0.64 N/mm$^2$. That is, it is indicated that a measured temperature fluctuation $\Delta T$ is high in a part where a high stress is generated in an object to be measured, such as a shape discontinuous part or a notch.

In the present Example, the first layer 105 is made of a material having a different $K_m$ from that of the material of the second layer 106. By this structure, the exposed part 16 can be detected as follows. That is, when the second layer 106 remains as in Figs. 4 and 8, only $\sigma$ generated in the second layer 106 is measured. However, as in Figs. 5 and 9, in the exposed part 16 in which the second layer 106 is exposed by disappearance of a part of the first layer 105, $\Delta\sigma$ generated in the first layer 105 and $\Delta\sigma$ generated in the second layer 106 are measured, and a difference in $\Delta\sigma$ therebetween is measured to detect the exposed part 16.

$\Delta\sigma$ is expressed by the following Formula 2.

[Numerical Formula 2]

$$\Delta\sigma = -\Delta T/(K_m \cdot T) \qquad \dots \text{ Formula 2}$$

Here, the first layer 105 is made of a polymer resin material. Specific examples thereof include a polyurethane resin, an acrylic resin, a fluororesin, an olefin resin, a polyester resin, a polyamide resin, an epoxy resin, a phenol resin, a vinyl chloride resin, and a polycarbonate resin. A polyurethane resin or a fluororesin is preferably used from a viewpoint of light resistance. In addition, examples thereof include a copolymer and a blend of these synthetic resins.

The second layer 106 is preferably made of a material having a different heat elastic modulus $K_m$ from the first layer 105. For example, by using a fluororesin for the first layer 105 and using a polyurethane resin for the second layer 106, the temperature fluctuation $\Delta T$ when the stress fluctuation $\Delta\sigma$ is 1.0 N/mm$^2$ can be calculated to be 14 mK and 1.5 mK by Formula 1 with reference to Table 1, respectively. By measuring this difference by an infrared detecting unit such as infrared thermography, it is possible to detect the exposed part 16 of the first layer.

In the present Example, the smooth part of the substrate has been exemplified. However, the first layer and the second layer can be disposed in a bonded part between the plurality of members, a curved surface portion having a rapidly-changing shape or size, or a notch. An application range thereof is not limited according to a portion. The material is not limited to the materials indicated in Table 1, and suitable materials can be combined to each other appropriately.

In the present Example, additional cost for the structure material is not necessary, but an infrared detecting unit such as infrared thermography is necessary.

[Example 5]

Another embodiment of the present invention will be described. In the present Example, the exposed part 16 is detected by a difference in color between the first layer 105 and the second layer 106 described in Example 1 or 2. The first layer 105 is formed of a layer having a different color from that of the second layer 106, and the exposed part 16 obtained by disappearance of the first layer 105 is detected by a color difference meter.

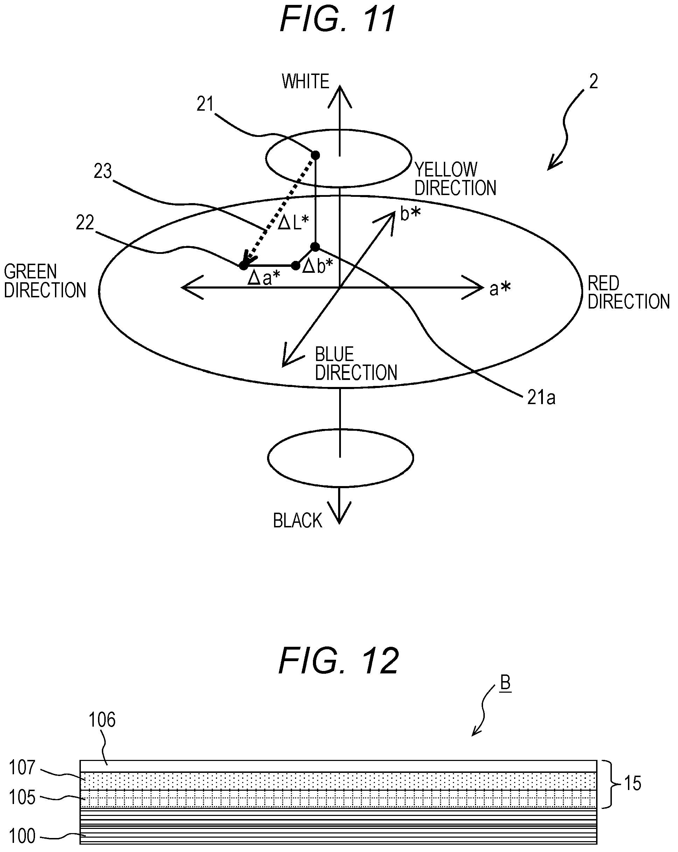

An outline of the present Example will be described with reference to Fig. 11. Fig. 11 illustrates a color system expressing a color of an object, which is a L*a*b* color system 2 standardized by International Commission on Illumination in 1976 and established by JIS-Z8781-4:2013.

In the L*a*b* color system 2, a brightness is represented by L*, and a chromaticity expressing hue and chroma is represented by a* and b*. a* or b* indicates a direction of color. a* indicates a red direction, -a* indicates a green direction, b* indicates an yellow direction, and -b* indicates a blue direction. As a numerical value thereof is larger, a color is clearer. As the numerical value goes toward the center, the color is darker.

According to the L*a*b* color system 2, a difference in color (color difference) can be represented by a numerical value of $\Delta E$*ab23. In Fig. 11, a color difference between a color 21 of the first layer 105 and a color 22 of the exposed second layer 106 is determined with Formula 3 by a color measuring unit, for example, using a color meter manufactured by Konica Minolta, Inc.

[Numerical Formula 3]

$$\Delta E\text{*}ab = \{(\Delta L\text{*})^2 + (\Delta a\text{*})^2 + (\Delta b\text{*})^2\}^{1/2} \qquad \dots \text{ Formula 3}$$

As described above, in the present Example, an arrangement of colors of the first layer 105 and the second layer 106 is not limited. The color difference ΔE*ab23 between the first layer 105 and the second layer 106 is determined with reference to the color system 2, and disappearance of the second layer 106 is detected using this value as a threshold during operation.

The color system is not limited to the L*a*b* color system 2. A standardized color system such as a Munsell color system, an XYZ color system, an L*c*h color system, or a Hunter Lab color system may be used as a standard. An original color system may be used.

As a method for detecting a color difference, there is a method of using the above color meter. In addition, a color difference can be determined by recording an image or a video in a recording device with a camera having a high resolution and performing post-processing using an image processing device. Under some conditions, it is also possible to determine a color difference visually without using a color difference meter.


[Example 6]

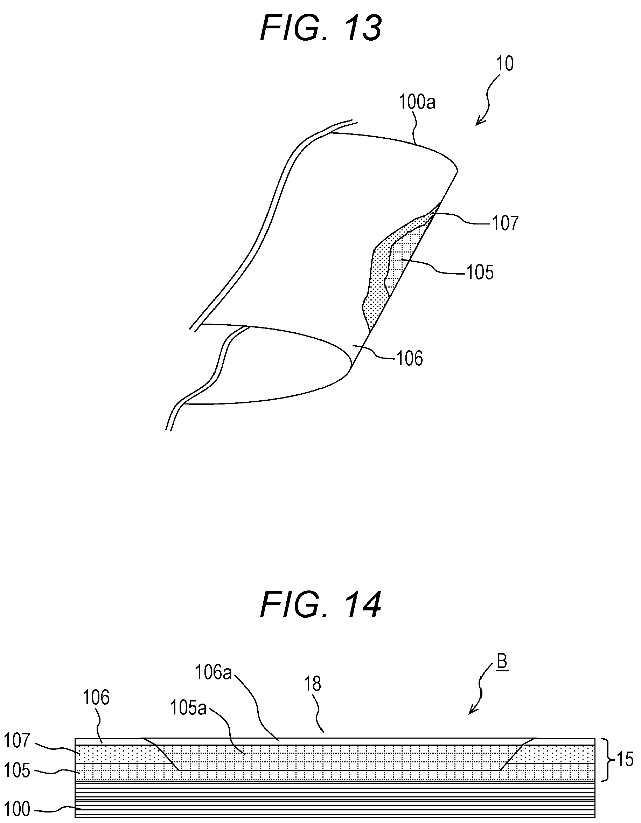

Another embodiment of the present invention will be described with reference to Figs. 12 and 13. Fig. 12 is a view illustrating another embodiment of the surface protection layer 15 of the blade substrate 100.

In the present Example, a third layer 107 containing a stress light emitting material different from that blended in the first layer 105 is disposed between the first layer 105 disposed on a surface of the blade substrate 100 and the second layer 106. Fig. 13 illustrates a state in which the surface protection layer 15 disposed on the surface of the blade substrate 100 is worn away in a plate thickness direction and the first layer 105 and the third layer 107 are exposed in a contour-like shape in the present Example.

Examples of the stress light emitting material blended in the first layer 105 or the third layer 107 include a material containing zinc sulfide (ZnS), strontium aluminate ($SrAl_2O_4$), or the like as a main component; a material having an unstable electron shell of 3d, 4d, 5d, or 4f in a base crystal of at least one metal oxide or complex oxide selected from $MgAl_2O_4$ and $CaAl_2O_4$ having a spinel structure, $Al_2O_3$ having a corundum structure, and $SrMgAl_{10}O_{17}$ having a β-alumina structure and containing at least one metal ion selected from rare earth metal ions and transition metal ions which can cause radiation transfer in this electron shell as a central ion of an emission center; a material containing at least one aluminate having a nonstoichiometric composition and having a lattice defect of emitting light when a carrier excited by mechanical energy returns to a ground state; a material containing at least one metal ion selected from rare earth metal ions and transition metal ions in this base material as a central ion of an emission center; and a material obtained by adding at least one emission center selected from rare earth metals and transition metals which emit light when an electron excited by mechanical energy returns to a ground state to a base material containing a complex of an oxide of at least one metal selected from Y, Ba, and Mg and an oxide of Si as a main component.

In addition, examples thereof include a material obtained by adding an emission center containing at least one rare earth metal or transition metal which emits light when an electron excited by mechanical energy returns to a ground state to a base material containing at least one oxide of $CaYAl_3O_7$, $Ca_2Al_2SiO_7$, $Ca_2(Mg,Fe)Si_2O_7$, $Ca_2B_2SiO_7$, $CaNaAlSi_2O_7$, $Ca_2MgSi_2O_7$, $(Ca,Na)_2(Al,Mg)(Si,Al)_2O_7$, and $Ca_2(Mg,Al)(Al,Si)SiO_7$ having a melilite structure; and a material obtained by adding an emission center containing at least one rare earth metal or transition metal which emits light when an electron excited by mechanical energy returns to a ground state to a base material containing $Sr_3Al_2O_6$ or $Ca_3Al_2O_6$ having a $FeS_2$ structure, such as ceramics or strontium aluminate having a β-alumina structure.

In general, an inorganic compound such as an aluminate or a silicate is used. Particularly, fine particles of strontium aluminate ($SrAl_2O_4$:Eu) obtained by adding europium which is becoming general or zinc sulfide (ZnS:Mn) obtained by adding manganese, or the like are more preferable.

These stress light emitting materials preferably have a spherical shape and a diameter of 1 μm to 10 μm in order to be filled in a synthetic resin or a synthetic fiber efficiently.

A base material of the first layer 105 or the third layer 107 preferably has high transparency in order to highlight a state when the stress light emitting material emits light. Specific examples thereof include a polyurethane resin, an acrylic resin, a fluororesin, an olefin resin, a polyester resin, a polyamide resin, an epoxy resin, a phenol resin, a vinyl chloride resin, a polycarbonate resin, and a copolymer and a blend of these synthetic resins. A resin having a high surface hardness and a small elasticity is more preferable in order to transmit a stress sufficiently.

At this time, the first layer 105 has a structure to perform stress emission of a color different from that of the third layer 107. For example, by blending strontium aluminate ($SrAl_2O_4$:Eu) obtained by adding europium which emits green light in the third layer 107 and blending zinc sulfide (ZnS:Mn) obtained by adding manganese which emits red light in the first layer 105, it is possible to quantitatively detect a state in which damage in the surface protection layer 15 of the blade substrate 100 proceeds.

The second layer 106 is made of a polymer resin material. Specific examples thereof include a polyurethane resin, an acrylic resin, a fluororesin, an olefin resin, a polyester resin, a polyamide resin, an epoxy resin, a phenol resin, a vinyl chloride resin, and a polycarbonate resin. A polyurethane resin or a fluororesin is preferably used from a viewpoint of light resistance. In addition, examples thereof include a copolymer and a blend of these synthetic resins.

In the present Example, the combination of materials is not limited only to the above materials, and the number of layers to constitute the surface protection layer is not limited.

The substrate including the surface protection layer is not limited to the blade of the wind power generation equipment, but a similar effect can be obtained when the substrate is applied to a tower or the like.

Also in Example 4 or 5, the structure of the present Example can be applied. By combination of a plurality of Examples among Examples 1 to 6, it is possible to detect damage on the surface of the structure material more accurately.

[Example 7]

An outline of repair of the surface protection layer 15 in the present Example will be described with reference to Fig. 14 by showing an example. Fig. 14 is a cross sectional view after the surface protection layer 15 is repaired in Fig. 12 described in Example 6, and includes the blade substrate 100, the first layer 105, the second layer 106, the third layer 107, a repair part 18, a repaired first layer 105a, and a repaired second layer 106a.

When repairing work is performed after the exposed part 16 is detected, it is difficult to restore the surface protection layer 15 to the same state as a new one in field work or visual work.

Therefore, the present Example is an example in which the repair part 18 has a structure different from a new one. The repaired first layer 105a may have a different plate thickness from the first layer 105, and the repaired second layer 106a may have a different plate thickness from the second layer 106. The repaired first layer 105a may be made of a material different from the new first layer 105. The layer number of the surface protection layer 15 is not limited. The substrate to be provided with the protection layer is not limited the blade of the present Example. Therefore, a similar effect can be obtained even when the repair is applied to another portion such as a tower.

Due to such a structure, by recording a history of a repaired part and compiling a database thereof, a tendency of a portion which is easily damaged can be grasped. By feeding back such a tendency to a designer, for example, a weakness of the wind power generation equipment is clarified, and a next-type wind power generation equipment is reinforced. Reliability can be thereby enhanced further.

[Example 8]

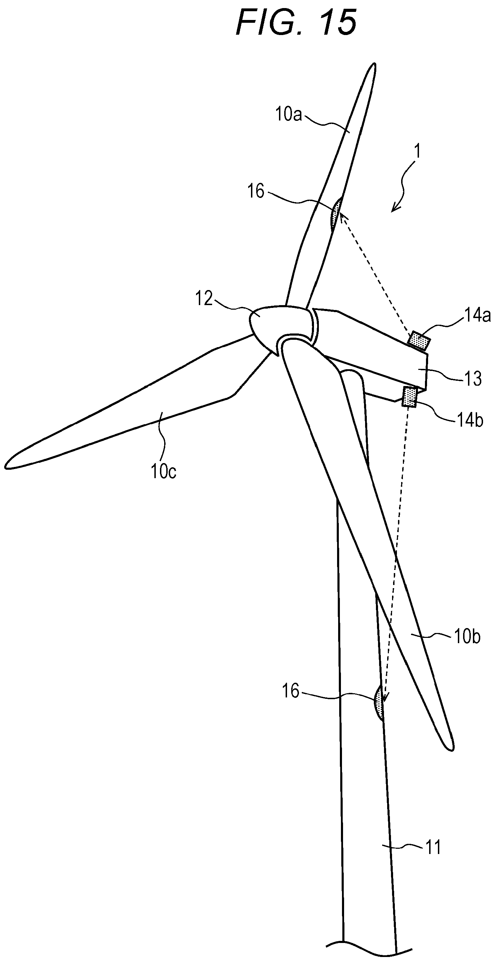

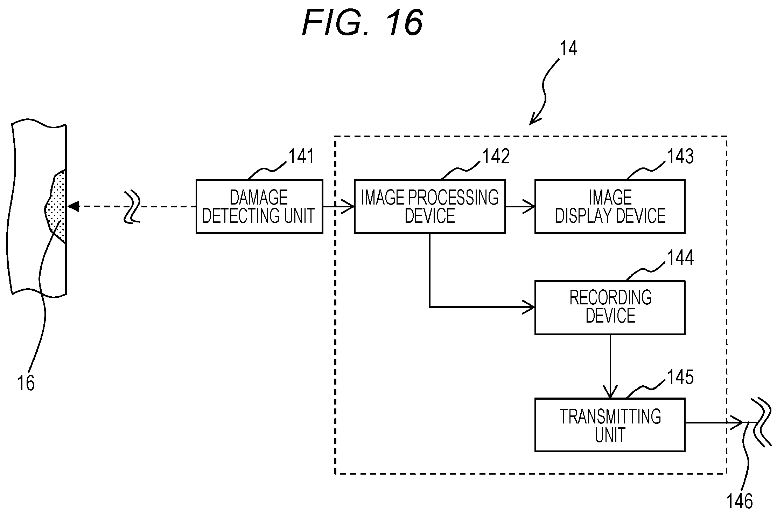

An outline of an embodiment of the substrate surface damage detecting system will be described with reference to Figs. 15 and 16. Fig. 15 illustrates a wind power generation equipment provided with a substrate surface damage detecting system 14 (14a, 14b). Fig. 16 illustrates a detailed structure of the substrate surface damage detecting system 14.

As illustrated in Fig. 16, the substrate surface damage detecting system in the present Example includes a damage detecting unit 141 to detect damage, an image processing device 142 to perform image processing, an image display device 143 to display an image, a recording device 144 to record image processing data, a transmitting unit 145 to transmit the image processing data to the outside, and a communication cable 146 to connect the transmitting unit 145, that is, the substrate surface damage detecting system 14 to an external equipment or device.

The damage detecting unit 141 is provided with any one of a CCD camera, an infrared camera, and a camera with a color difference meter according to the layer number of the surface protection layer 15 disposed on the substrate, the kind of each layer, and the film thickness of each layer.

The color difference meter may be incorporated into the image processing device 142. Fig. 16 illustrates an example in which the transmitting unit 145 is connected to an external equipment or device using the communication cable 146. However, data may be transmitted to an external equipment or device wirelessly by disposing a wireless communication unit in the transmitting unit 145 or the like.

In the present Example, as illustrated in Fig. 15, the substrate surface damage detecting system 14 (14a, 14b) disposed in the nacelle 13 of the wind power generation equipment 1 detects the exposed part 16 (damaged part) generated on the substrate surface by any means described in Examples 1 to 7.

The image processing device 142 includes a threshold-inputting unit to detect damage of the substrate surface. When a threshold set in advance during operation of the wind power generation equipment is exceeded, a person in charge of maintenance is informed of a damaged portion requiring repair. It is possible to carry out a repair plan properly by recording the history of the repaired portion, the repair number of the whole, or the like in the recording device 144 and by recording and analyzing the tendency or frequency of the repaired portion. By feeding back these to a designer, a next-type wind power generation equipment is reinforced when being designed, and reliability can be enhanced.

At this time, thresholds of a size (area) of a damaged region, a magnitude of emission intensity, a difference in color (color difference), and the like are used. A damage quantitative value (degree of damage) of the exposed part 16 (damaged part), extracted by image processing performed by the image processing device, is compared with the threshold.

A place to install the substrate surface damage detecting system 14 is only required to be a portion capable of monitoring the substrate of the wind power generation equipment 1. A height or a position to be installed is not limited. For example, the substrate surface damage detecting system 14 may be attached to the tower 11.

[Example 9]

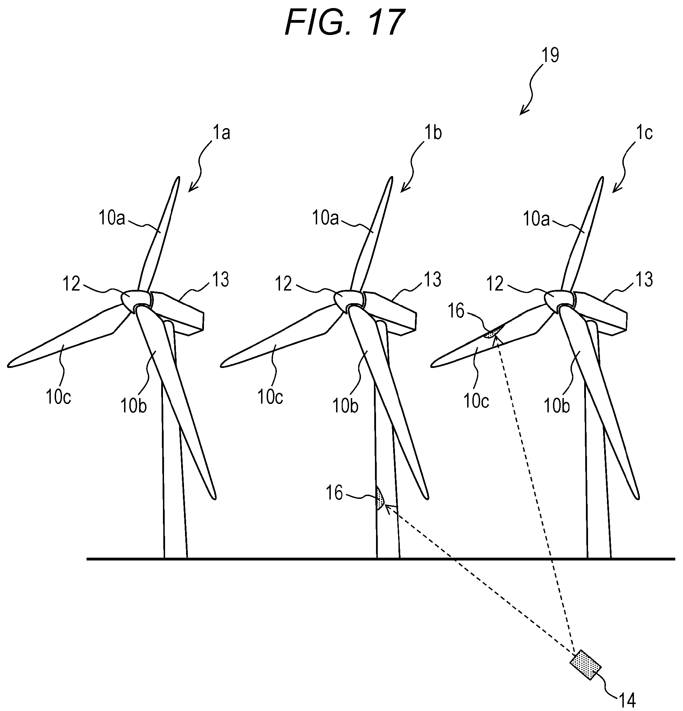

Another embodiment of the substrate surface damage detecting system will be described with reference to Fig. 17. Fig. 17 illustrates a set type wind power generation equipment (wind farm) 19 provided with the substrate surface damage detecting system 14. The detailed structure of Fig. 17 is almost similar to that of Example 8. It is preferable for the damage detecting unit 141 to use a damage detecting device having a high resolution, capable of photographing even at a long distance.

In the present Example, as illustrated in Fig. 17, the substrate surface damage detecting system 14 of the wind farm 19 is installed at a remote place, that is, at a place far away from each wind power generation equipment.

According to the present Example, when the wind power generation equipment is installed on land, on the seashore (along the coast), or on the sea, it is possible to monitor a state of the wind power generation equipment or the wind farm 19 including a plurality of wind power generation equipments from a remote place. Therefore, it is possible to reduce the number of the substrate surface damage detecting system 14 installed.

In the above Examples, the structure material according to an aspect of the present invention has been described mainly using an example of the wind power generation equipment. However, a similar effect can be obtained even when the structure material is applied to a railway vehicle, an automobile body, an airplane body, a pressure vessel used for various plant equipments, or the like, exposed to an outdoor severe environment, like the wind power generation equipment.

The present invention is not limited to the above Examples, but includes various modification examples. For example, the above Examples have been described in detail in order to explain the present invention to be understood easily. The present invention does not necessarily include all the components described above. It is possible to replace some components of an Example with components of another Example. It is also possible to add some components of an Example to another Example. In addition, some components of an Example can be deleted or replaced by other components, or another component can be added thereto.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A structure material of a structure used mainly in an outdoor environment, the structure material comprising:

   a substrate as a base of the structure material;
   a first protection layer (105) formed on one main surface of the substrate; and
   a second protection layer (106) formed on the first protection layer (105) so as to cover the first protection layer (105).

2. The structure material according to claim 1, wherein exposure of the first protection layer (105) is detected by detecting a color difference or a difference in heat elastic modulus between the first protection layer (105) and the second protection layer (106).

3. The structure material according to claim 1, wherein
   the first protection layer (105) contains, as a component thereof, a stress light emitting material which emits light by a stress, and
   exposure of the first protection layer (105) is detected by detecting emission of the stress light emitting material from a surface side of the structure material.

4. The structure material according to claim 2, wherein exposure of the first protection layer (105) is detected by detecting a difference in stress distribution caused by a difference in heat elastic modulus between the first protection layer (105) and the second protection layer (106) by an infrared temperature measuring unit.

5. The structure material according to claim 1, further comprising a third protection layer (107) formed on the first protection layer (105) and between the first protection layer (105) and the second protection layer (106) so as to cover the first protection layer (105), wherein

the first protection layer (105) and the third protection layer (107) contain, as components thereof, a first stress light emitting material and a second stress light emitting material different from each other, respectively, and

exposure of the first protection layer (105) or the third protection layer (107) is detected by detecting emission of the first stress light emitting material or the second stress light emitting material from a surface side of the structure material.

6. A wind power generation equipment comprising:

a rotation axis (12) to which a plurality of blades (10) is connected;
a nacelle (13) supporting the rotation axis (12) rotatably; and
a tower (11) serving as a prop of the nacelle (13), wherein
a structure material on a surface of which a protection layer is formed is used in at least one portion of the plurality of blades (10), the rotation axis (12), the nacelle (13), and the tower (11), and
the structure material is the structure material according to claim 1.

7. The wind power generation equipment according to claim 6, wherein the structure material is used for an adhesively bonded part or a welded part in any portion of the plurality of blades (10), the rotation axis (12), the nacelle (13), and the tower (11).

8. The wind power generation equipment according to claim 6, wherein the structure material is used for a part in which the substrate has curvature or a part in which the thickness of the substrate changes in any portion of the plurality of blades (10), the rotation axis (12), the nacelle (13), and the tower (11).

9. The wind power generation equipment according to claim 6, wherein in the structure material, exposure of the first protection layer is detected by detecting a color difference or a difference in heat elastic modulus between the first protection layer (105) and the second protection layer (106).

10. The wind power generation equipment according to claim 6, wherein
the first protection layer (105) contains, as a component thereof, a stress light emitting material which emits light by a stress, and
exposure of the first protection layer (105) is detected by detecting emission of the stress light emitting material from a surface side of the structure material.

11. The wind power generation equipment according to claim 9, wherein in the structure material, exposure of the first protection layer (105) is detected by detecting a difference in stress distribution caused by a difference in heat elastic modulus between the first protection layer (105) and the second protection layer (106) by an infrared temperature measuring unit.

12. The wind power generation equipment according to claim 6, wherein
the structure material further includes a third protection layer (107) formed on the first protection layer (105) and between the first protection layer (105) and the second protection layer (106) so as to cover the first protection layer (105),
the first protection layer (105) and the third protection layer (107) contain, as components thereof, a first stress light emitting material and a second stress light emitting material different from each other, respectively, and
exposure of the first protection layer (105) or the third protection layer (107) is detected by detecting emission of the first stress light emitting material or the second stress light emitting material from a surface side of the structure material.

13. A wind power generation system comprising:

the wind power generation equipment (1) according to claim 6;
a damage detecting unit (141) configured to detect a damage state of a surface of the wind power generation equipment (1) from the outside; and
a surface damage detecting system configured to process data acquired by the damage detecting unit, wherein the surface damage detecting system includes:

an image processing device (142) configured to perform image processing for the data acquired by the damage detecting unit;

an image display device (143) configured to display the image processing data processed by the image processing device (142);

a recording device (144) configured to record the image processing data processed by the image processing device (142); and

a transmitting unit (145) configured to transmit the image processing data recorded in the recording device (144) to the outside by wired communication or wireless communication.

14. The wind power generation system according to claim 13, wherein exposure of the first protection layer (105) is detected by detecting a color difference or a difference in heat elastic modulus between the first protection layer (105) and the second protection layer (106).

15. The wind power generation system according to claim 13, wherein
the recording device (144) stores history information of a part in which the first layer (105) is exposed, and
the wind power generation equipment (1) is repaired based on the history information of the recording device (144).

# FIG. 1

## FIG. 2

## FIG. 3

## FIG. 4

## FIG. 5

# FIG. 6

## FIG. 7

## FIG. 8

## FIG. 9

## FIG. 10

# FIG. 11

# FIG. 12

EP 3 054 154 A1

## FIG. 13

## FIG. 14

22

# FIG. 15

## FIG. 16

# FIG. 17

Europäisches
Patentamt

European
Patent Office

Office européen
des brevets

# EUROPEAN SEARCH REPORT

Application Number

EP 16 15 4296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/220005 A1 (KAWANO MASAYA [JP] ET AL) 29 August 2013 (2013-08-29)<br><br>* paragraph [0003] - paragraph [0075]; figures 1-6 * | 1,2,4, 6-9,11, 13-15 | INV.<br>F03D17/00<br>F03D80/50<br>G01N25/72<br>G01M5/00<br>G01M99/00 |
| X | WO 2013/131516 A2 (IGUS INGENIEURGEMEINSCHAFT UMWELTSCHUTZ MESS UND VERFAHRENSTECHNIK G M) 12 September 2013 (2013-09-12)<br>* page 1, line 3 - page 15, line 7; figures 1-6 * | 1-15 | G01N21/70<br>G01N21/88 |
| X | DE 20 2011 104315 U1 (REPOWER SYSTEMS SE [DE]) 20 November 2012 (2012-11-20)<br>* paragraph [0001] - paragraph [0035]; figure 4 * | 1,2,4,6, 8,9,11 | |
| X<br>A | JP 2013 246097 A (CENTRAL RES INST ELECT) 9 December 2013 (2013-12-09)<br>* the whole document * | 1,2,4<br>3,5-15 | |
| X<br>A | US 6 974 641 B1 (CHOY KWANG-LEONG [GB] ET AL) 13 December 2005 (2005-12-13)<br>* the whole document * | 1,2,4<br>3,5-15 | TECHNICAL FIELDS SEARCHED (IPC)<br><br>F03D<br>G01N<br>G01M |
| A | EP 2 679 769 A2 (GEN ELECTRIC [US]) 1 January 2014 (2014-01-01)<br>* the whole document * | 1-15 | |

The present search report has been drawn up for all claims

| Place of search | Date of completion of the search | Examiner |
|---|---|---|
| The Hague | 2 June 2016 | Herdemann, Claire |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

**ANNEX TO THE EUROPEAN SEARCH REPORT**
**ON EUROPEAN PATENT APPLICATION NO.**                   EP 16 15 4296

This annex lists the patent family members relating to the patent documents cited in  the above-mentioned European search report.
The members are as contained in the European Patent Office EDP file on
The European Patent Office is in no way liable for these particulars which are merely given for the purpose of information.

02-06-2016

| Patent document cited in search report | | Publication date | Patent family member(s) | | Publication date |
|---|---|---|---|---|---|
| US 2013220005 | A1 | 29-08-2013 | NONE | | |
| WO 2013131516 | A2 | 12-09-2013 | DE 102012203455 | A1 | 05-09-2013 |
| | | | DE 112013001299 | A5 | 26-02-2015 |
| | | | EP     2844974 | A2 | 11-03-2015 |
| | | | WO   2013131516 | A2 | 12-09-2013 |
| DE 202011104315 | U1 | 20-11-2012 | NONE | | |
| JP 2013246097 | A | 09-12-2013 | JP     5831940 | B2 | 09-12-2015 |
| | | | JP   2013246097 | A | 09-12-2013 |
| US 6974641 | B1 | 13-12-2005 | DE     69905907 | D1 | 17-04-2003 |
| | | | DE     69905907 | T2 | 04-12-2003 |
| | | | EP     1105550 | A1 | 13-06-2001 |
| | | | US     6974641 | B1 | 13-12-2005 |
| | | | US   2007015283 | A1 | 18-01-2007 |
| | | | US   2009226326 | A1 | 10-09-2009 |
| | | | WO     0006796 | A1 | 10-02-2000 |
| EP 2679769 | A2 | 01-01-2014 | CN     103511005 | A | 15-01-2014 |
| | | | EP     2679769 | A2 | 01-01-2014 |
| | | | JP   2014009687 | A | 20-01-2014 |
| | | | RU   2013128692 | A | 27-12-2014 |
| | | | US   2014003905 | A1 | 02-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014519024 W
- JP 2011021988 A

- JP 2013155062 A